# EUROPEAN PATENT APPLICATION

(11) **EP 4 386 589 A1**
(43) Date of publication of application: **19.06.2024**
(21) Application number: 22213240.9
(22) Date of filing: 13.12.2022
(51) Int. Cl.: G06F 21/16, G06F 21/64, H04N 21/2389, H04N 21/44, H04N 21/442, H04N 21/8358

(54) **AUTHENTICATING AUDIBLE SPEECH IN A DIGITAL VIDEO FILE**

(71) Applicant: Nagravision Sàrl, 1033 Cheseaux-sur-Lausanne (CH)
(72) Inventor: AMIET, Nils, Cheseaux-sur-Lausanne (CH); PELISSIER, Sylvain, Cheseaux-sur-Lausanne (CH); VIALAR, Louis, Cheseaux-sur-Lausanne (CH)
(74) Representative: Mewburn Ellis LLP

(57) **Abstract**

A computer-implemented method of authenticating audible speech in a digital video file is provided. The method comprises: obtaining an electronic transcript of the audible speech from an audio track of the digital video file, using a digital signature algorithm to generate a digital signature based on the electronic transcript and a private key, and inserting the digital signature in a video track of the digital video file.

Also provided is a computer-implemented method of authenticating audible speech in a copy of a digital video file. The method comprises: receiving a copy of the digital video file containing unverified audible speech, obtaining a second electronic transcript, extracting the digital signature, verifying the digital signature and, if the digital signature is successfully verified, determining that audible speech in the copy of the video file is authentic. The second electronic transcript is a transcript of the unverified audible speech obtained from the audio track of the copy of the digital video file, and the digital signature is extracted from the video track of the copy of the digital video file and is verified using the digital signature algorithm, the second electronic transcript and a public key.

## Description

### TECHNICAL FIELD OF THE INVENTION

The present invention relates to a computer-implemented method of authenticating audible speech in a digital video file.

### BACKGROUND TO THE INVENTION

Digital video files shared on social media and video platforms may contain false images or audio which could deceive viewers. Such false videos may be produced using deep fake technology which is becoming more and more difficult to detect. False videos which have been tampered with using deep fake technology can make it increasingly harder for people to know if a video they are watching is authentic.

Some false video files contain video frames which have been modified to show false images. Other false video files may contain an audio track which has been modified to sound different. This is particularly concerning in videos containing audible speech because the words being spoken may be altered to change the meaning of the speech. For example, a video file containing a political speech or an announcement from a country's leader may be altered to change the contents of the speech. In other examples, the speed or timing of audible speech may be altered to make a speaker appear drunk, difficult to understand, or sound less convincing.

Deep fake technology can be used to alter the audible speech in video files in a way that is difficult to detect and may even make the altered speech look as if it is genuinely coming from the mouth of a person shown in the video. Video files containing fake audible speech may be shared widely online, for example on social media platforms, causing widespread deception and misconceptions amongst the public who view the videos. It is getting more and more difficult for the recipients of such videos to know if the audible speech that they can hear is authentic or if it contains fake speech.

The present invention has been devised in light of the above considerations.

### SUMMARY OF THE INVENTION

Broadly speaking, the present invention provides a computer-implemented method of authenticating audible speech in a digital audio file. This is done by generating a digital signature based on an electronic transcript, e.g. from a trusted party, and inserting that signal into the digital video file. This enables verification of the electronic transcript at the consumer end. Correspondingly, the present invention also provides a computer-implemented method of verifying, validating or authenticating a received electronic transcript by extracting and verifying a signature which has been inserted in a digital video file.

Accordingly, in a first aspect of the present invention there is provided: a computer-implemented method of authenticating audible speech in a digital video file, the computer-implemented method comprising:
obtaining an electronic transcript of the audible speech from an audio track of the digital video file,
generating a digital signature based on the electronic transcript and a private key using a digital signature algorithm,
inserting the digital signature in a video track of the digital video file.

Advantageously, by inserting the digital signature in the video track, the signature can be extracted at a later time from a copy of the digital video file, for example when the digital video file is posted on social media, and a social media user wishes to verify an electronic transcript accompanying the video. The extracted signature may then be used to verify speech in the copy of the video file. Therefore, recipients of the video file can have more confidence that the audible speech in the video file is authentic and an accurate representation of the original speech.

Moreover, by inserting the digital signature in the video track of the video file the signature may be afforded more resistance to modification when the video file is re-encoded or reformatted when being shared across different platforms (e.g. on the internet).

The method of the first aspect may be performed by a trusted source of a video file. The trusted source may be any party that wishes to authenticate the speech in a video file before sharing the authenticated video file with recipients. For example, the trusted party may be a media outlet or press agency that may wish to share a video of a speech and prove to recipients of the video that the speech is authentic and has not been tampered with.

Examples of tampering of speech in a video file may include the modification of some or all of the words in the speech to deceive viewers of the video. The present invention aims to prevent such tampering by signing the original video file with a digital signature according to the first aspect. In this way, malicious parties may be dissuaded from tampering with the speech in the video file because the tampered speech would no longer correspond with the digital signature thus alerting recipients of the video file to the fact that the speech may have been tampered with.

Audible speech present in the video file may be considered as including any articulated words which are spoken by a person and can be heard in the audio track of the video file. The audible speech may form part or all of a speech or announcement.

The electronic transcript may be considered as a text or written copy of the audible speech in the video file i.e. the electronic transcript contains some or all of the words which can be heard spoken in the video file. The transcript containing the text may be stored as an electronic file in the memory unit of a computer system.

Obtaining the electronic transcript of the audible speech may comprise converting the audible speech from the audio track of the digital video file to text using an automatic speech-to-text converter. For example, the automatic speech-to-text converter may include any suitable speech-to-text algorithm such as: DeepSpeech (by Mozilla)¹, PaddleSpeech², SpeechBrain³, Whisper (by OpenAI)⁴, Coqui STT⁵, or Google Speech-to-Text⁶.

In other examples, the electronic transcript may be provided as separate input by the trusted party who have access to the original speech transcript.

The digital signature may be generated using a known digital signature algorithm such as RSA⁷, DSA⁸, ECDSA⁹, EdDSA¹⁰. For example, generating the digital signature, using the known digital signature algorithm, may comprise converting the verified electronic transcript into a first message digest using a message digest algorithm (e.g. a hashing function) and then signing the first message digest using the private key. Advantageously, such algorithms are known to be highly resistant to tampering or modification by third parties who do not have access to the private key. ^{l} **https://github.com/mozilla/DeepSpeech ² https://github.com/PaddlePaddle/PaddleSpeech ³ https://github.com/speechbrain/speechbrain ⁴ https://github.com/openai/whisper ⁵ https://github.com/coqui-ai/STT ⁶ https://cloud.google.com/speech-to-text ⁷ RSA specification: http://people.csail.mit.edu/rivest/Rsapaper.pdf Wikipedia article: https://en.wikipedia.org/wiki/RSA_(cryptosystem) ⁸ DSA and ECDSA specifications: https://nvlpubs.nist.gov/nistpubs/FIPS/NIST.FIPS.186-4.pdf DSA Wikipedia article: https://en.wikipedia.org/wiki/Digital_Signature_Algorithm ⁹ ECDSA Wikipedia article: https://en.wikipedia.org/wiki/Elliptic_Curve_Digital_Signature_Algorithm ¹⁰ EdDSA specification: https://ed25519.cr.yp.to/ed25519-20110926.pdf Wikipedia article: https://en.wikipedia.org/wiki/EdDSA**

The digital signature may be represented as a visible mark or icon. For example, the digital signature may be represented as a QR code or a bar code.

The digital signature may be inserted in the video track as a visible image or watermark. For example, the digital signature may be inserted in the video track as a visible QR code overlaid on the frames of the video in a discrete location such as in a corner or to a side of the frames. This way recipients of copies of the video file can know that there is a signature available for authenticating speech in the video file.

In other examples, the digital signature may be inserted in the video track in a format which is not visible to the human eye. For example, the digital signature (which may, for example, be a QR code or a bar code) may be inserted in the video track using steganographic techniques.

The computer-implemented method may further comprise obtaining additional information about the video file, wherein the generated digital signature is based on the electronic transcript, the private key, and the additional information.

The transcript may be concatenated with the additional information to form a message. The resulting message may then be used to generate the digital signature using a known digital signature algorithm and the private key. In other examples, separate digital signatures may be generated for some or all of the transcript and for the additional information. For example, a first digital signature may be generated for verifying the transcript and a second digital signature may be generated for verifying an author name of the audible speech.

By including additional information in the digital signature, more variables associated with the video file may be verified thus increasing effectiveness of the authentication method and user confidence in the authenticity of the video files being viewed.

At least some of the additional information may be obtained from metadata of the video file. Therefore, generating the digital signature may advantageously be easier and require less manual intervention from the trusted party.

Additionally or alternatively, at least some of the additional information may be received as a user input. In this way more data can be included in the signature for verification later, thus increasing effectiveness of the authentication method because more types of false data and information may be detected.

The additional information about the video file may include any information that a viewer of the video may determine by watching the video or by inspecting the video file.

For example, the additional information may include an author or speaker of the audible speech in the video file.

Additionally/alternatively the additional information may also include date and/or location information about the video file or the speech in the video file.

In some examples, the additional information about the video file may include timing information associated with the audible speech. Advantageously, by including timing information in the digital signature the timing of the audible speech may be verified later. This is useful for detecting if the audio track of a video has been tampered with by changing the speed of a speech, or if the original video length was truncated.

The speed of a speech may be considered as the pace or cadence that a speaker of the audible speech in the video file speaks i.e., the pace at which the speaker articulates their words. For example, a video file may be tampered with to make it seem as if a person is speaking more slowly than would be expected e.g. to make the person sound inebriated or slurred.

Timing information may be considered as data which represents the placement in time of sections of the audible speech within the digital video file. For example, the timing information may include a time between the start of the video file and the presence of a specific section or word of the audible speech in the video file. The time may be measured in units of seconds, milliseconds etc. In other examples, the time may be measured using digital units or integers. For example, time may be represented as a frame number of the video file which corresponds to a frame of the video track. In other examples, the time may be represented by a segment number wherein the video file may be split into segments having a known fixed or variable length. The timing information may be obtained by splitting the audio track into segments. The transcript of the audible speech may then be obtained for each segment of the audio track and the transcript may be supplemented with information containing a start time of each segment.

The transcript may alternatively or additionally be supplemented with a segment number or an end time of each segment.

The segments may have a predetermined segment length. In some examples, the predetermined segment length may be a fixed length for every segment (e.g. 5 segments). In other examples, the predetermined segment length may be variable. For example, the segment length may be adjusted to be longer or shorter to prevent words in the audible speech from being divided between segments. Other suitable audio segmentation techniques may also be used to divide the audible speech (e.g. a beam search-based end pointing algorithm as described in Section 5.1 of https://aclanthology.org/2022.konvens-1.11.pdf).

The same digital signature may be inserted into one, multiple, or all of the frames of the video track of the audio file. Inserting the digital signature into fewer frames can reduce the amount of time and computing power required to insert the digital signature into a long video. However, inserting the same digital signature into more frames may increase the resilience of the digital signature to being lost when a video file is edited, cropped, or shared between platforms.

The computer-implemented method may comprise generating multiple digital signatures corresponding to different sections of the audible speech and embedding the multiple digital signatures in the video track of the video file. However, in this example, the section of the video file which was used to generate each digital signature must be known so that the digital signature can be successfully verified later.

The above disclosure relates to a process via which a digital signature is generated based on an electronic transcript and inserted into a digital video file. A corresponding, second aspect of the invention relates to a process for authenticating audible speech in a copy of that digital video file, e.g. by a client device on which a user is viewing the digital video file on social media, or the like.

In a second aspect of the present invention there is provided: a computer-implemented method of authenticating audible speech in a copy of a digital video file, the method comprising:
receiving a copy of the digital video file containing unverified audible speech,
obtaining a second electronic transcript of the unverified audible speech from the audio track of the copy of the digital video file,
extracting a digital signature from the video track of the copy of the digital video file,
verifying the digital signature using the second transcript and a public key using a digital signature algorithm, and
if the digital signature is successfully verified, determining that the transcript of the audible speech from the copy of the video file is authentic.

Advantageously, by verifying the second electronic transcript using the digital signature in the video track, a recipient of the digital video file can receive assurance that the speech in the video has not been tampered with. If the audible speech has been tampered such that the second electronic transcript is different to the electronic transcript that was used to generate the digital signature, then the digital signature cannot be successfully verified. Accordingly, recipients of a video file can have more confidence that the audible speech which they are listening to is authentic and is the original speech.

The computer-implemented method of authenticating audible speech in the copy of the digital video file may be executed by a software module installed on or accessed by a client-side computer. For example, the software module may be included in an internet plug-in which is installed in order to verify and playback videos on a particular website or media platform. Installation of the plug-in may include installing a number of known public keys associated with verified sources of videos.

The software module may include instructions which when executed (e.g. by a client-side device) cause a user interface to be displayed. The user interface may comprise input means (such as drop down lists, or text boxes) for users of the software to enter information about a video which contains audible speech which the user would like to authenticate.

The digital signature may be verified using the known digital signature algorithm that was used to generate the signature (e.g. RSA, DSA, ECDSA, EdDSA). Such algorithms are known to be resistant to tampering or modification without access to a private key thus increasing the security of the authentication method.

For example, verifying the digital signature, using the known digital signature algorithm and the public key, may comprise verifying the digital signature according to DSA, RSA, EdDSA, ECDSA, or any other suitable digital signature algorithm. If the digital signature is successfully verified, then the recipient of the video may have confidence that the second electronic transcript is the same as the original electronic transcript which was used to generate the digital signature.

The digital signature may be represented as a visible mark or icon. For example, the digital signature may be represented as a QR code or a bar code.

The digital signature may be inserted in the video track as a visible image or watermark. For example, the digital signature may be inserted in the video track as a visible QR code overlaid on the frames of the video in a discrete location such as in a corner or to a side of the frames. This way recipients of copies of the video file may know that there is a signature available for authenticating speech in the video file.

In other examples, the digital signature may be inserted in the video track in a format which is not visible to the human eye. For example, the digital signature (which may, for example, be a QR code or a bar code) may be inserted in the video track using steganographic techniques.

Obtaining the second electronic transcript of the unverified audible speech from the audio track of the copy of the digital video file may comprise converting the audible speech to text using an automatic speech-to-text converter.

Preferably, the automatic speech-to-text converter used to obtain the second electronic transcript is the same automatic speech-to-text converter as an automatic speech-to-text converter used to generate the digital signature. Specifically, the speech-to-text converter used to obtain the second electronic transcript may be included in a software program or module which is executed by the client-side device to convert the audible speech to text. A same or different software program or module may be executed by a trusted party to generate the digital signature. Preferably the conversion algorithm used by the speech-to-text converters in each case is the same. This is useful to ensure that words in audible speech which may be interpreted differently by different speech-to-text algorithms are more likely to be the same in the first and second electronic transcripts.

The computer-implemented method of the second aspect may further comprise obtaining the public key from a list of known public keys associated with verified sources.

Alternatively the computer-implemented method may comprise requesting a user to manually input the public key. For example, the software module or plug-in may include instructions which when executed (e.g. by a client-side device) cause a user interface to be displayed. The user interface may comprise an input means such as a text box or drop down menu for a user to enter the public key.

In other examples, the computer-implemented method may comprise conducting an automatic internet search to find a verified source of the copy of the video file and retrieving the public key from the verified source.

The computer-implemented method of the second aspect may further comprise informing a user that the second electronic transcript audible speech in the copy of the digital video file is authentic. Informing the user may include displaying an icon next to the copy of the video when the digital video file is being displayed. For example, the software module or plug-in may include instructions which when executed (e.g. by the client-side device) cause an icon to be displayed next to the video playing on a screen when the speech in the copy of the digital video file is determined to be authentic.

The computer-implemented method of the second aspect may further comprise obtaining unverified additional information about the copy of the digital video file, wherein the second electronic transcript, the unverified additional information and the public key are used to validate the digital signature. By including additional information about the video file in the digital signature verification more information may be authenticated increasing security of the authentication method and giving a recipient of the video more confidence that the video hasn't been tempered with.

At least some of the unverified additional information may be obtained from metadata of the copy of the video file. Therefore, generating the digital signature may advantageously be easier and require less manual intervention from users at the client-side.

Additionally or alternatively, at least some of the additional information may be received as a user input. For example, the software module or plug-in may include instructions which when executed (e.g. by the client-side device) cause a user interface to be displayed comprising input means for the user to enter additional information about the video file. The instructions may also comprise instructions which when executed cause prompts to be displayed to the user with suggestions for candidate additional information. In this way more data can be included in the signature for verification later, thus increasing effectiveness of the authentication method because more types of false data and information may be detected.

The unverified additional information about the copy of the video file may include any information that a viewer of the video may determine by watching the video or by inspecting the copy of the video file.

For example, the unverified additional information may include an unverified author or speaker of the audible speech. Preferably, the unverified author or speaker is the person that appears to be making the speech in the copy of the video. By verifying the author of the audible speech using the signature tampering of the video may be detected where the transcript of the audible speech is unmodified but the person making the speech is incorrect. Accordingly, the chances of a recipient of the video being deceived by tampering of the identity of the speaker are reduced.

Obtaining the unverified author or speaker of the audible speech may include using a face recognition algorithm to analyse the digital video file and identify a speaker visible in the video track as a candidate author.

The candidate unverified author may be displayed to a user as one or multiple options. The user may then select the author of the speech that they can see in the video from the options available. In some examples, images of suggested authors may be displayed to the user and the user may then select the author of the speech that they can see in the video.

The candidate author may be suggested using heuristics (e.g. based on the video title, an internet search of the speech transcript, or using other available data about the video file and where it came from).

Verifying the digital signature may comprise constructing a message by concatenating the unverified author to the second electronic transcript of the audible speech in the copy of the video file. The resulting message may then be verified using the digital signature algorithm and the public key as described above. If the author name and electronic transcript which were used to generate the digital signature are the same as the unverified author name and the second transcript, then the digital signature may be successfully verified. Thus, the recipient of the video file has confidence that the second electronic transcript and the apparent speaker of the audible speech in the copied video have not been tampered with.

In other examples, the author of the audible speech in the copy of the video file may be verified separately to the transcript of the audible speech. In this example, a first digital signature may be generated and verified for the electronic transcript and a second digital signature may be generated and verified for the author.

Additionally, or alternatively, the unverified additional information about the copy of the digital video file may include timing information associated with the unverified audible speech. Advantageously, by obtaining timing information about the audible speech and verifying the timing information using the digital signature, the timing of the audible speech may be verified. This is useful for detecting if the audio track of a video has been tampered with by changing the speed of the speech.

The computer-implemented method of the second aspect may further comprise displaying the second electronic transcript as subtitles.

The subtitles may be displayed overlaid on the video. For example, timing information may be extracted from the copy of the video file and used to display the subtitles on the video, in time with the audible speech.

Alternatively, the subtitles may be displayed alongside the video. For example, the subtitles may be displayed underneath the video in full (i.e. without timing information).

Advantageously, by displaying the second electronic transcript a person watching the video may be able to read the transcript while listening to the audible speech. If the person hears something in the speech which is different from what is written in the subtitles, then the viewer may infer that the audio track has been tampered with, thus increasing the reliability of the authentication. This is useful in examples where the audio track of a video file has been tampered with in such a way that the audible speech sounds different to a listener but so that the electronic transcript generated by a speech-to-text converter is unmodified. In these examples, the digital signature may successfully verify the transcript of the speech. However, the recipient of the video may still be able to tell if the speech has been modified by comparing what they hear to the transcript which was verified.

In a third aspect of the present invention there is provided: a computer-implemented method of authenticating audible speech in a copy of a digital video file, the computer-implemented method comprising the computer-implemented method of any of the first aspect and the computer-implemented method of the second aspect.

The computer-implemented method of the third aspect may additionally comprise any of the aforementioned optional features described above in relation to the first and second aspects.

In a fourth aspect of the present invention there is provided digital video file comprising:
an audio track containing audible speech, and
a video track comprising a digital signature for authenticating a transcript of the audible speech, wherein the digital signature was generated using the computer-implemented method of the first aspect and any optional features thereof.

The digital signature of the fourth aspect may be configured to verify a transcript of audible speech using the computer-implemented method of the second aspect and any optional features thereof.

In a fifth aspect of the present invention there is provided a system for authenticating audible speech in a digital video file according to the computer-implemented method of the first aspect, the system comprising a transcript generation module, a digital signature generation module, and a video file editing module; wherein
the transcript generation module is configured to obtain an electronic transcript of the audible speech from an audio track of the digital video file,
the digital signature generation module is configured to generate a digital signature based on the electronic transcript and a private key using a digital signature algorithm, and
the video file editing module is configured to insert the digital signature in a video track of the digital video file.

In a sixth aspect of the present invention there is provided a system for authenticating audible speech in a copy of a digital video file according to the computer-implemented method of the second aspect, the system comprising a transcript generation module, a signature extraction module; and a digital signature verification module; wherein
the transcript generation module is configured to obtain a second electronic transcript of unverified audible speech from an audio track of the copy of the digital video file,
the signature extraction module is configured to extract a digital signature from the video track of the copy of the digital video file, and
the digital signature verification module is configured to verify the digital signature using the second transcript and a public key using a digital signature algorithm.

Additional aspects of the invention may relate to systems configured to execute the computer-implemented method of any one of the first, second, and third, aspects of the invention. Specifically, the system may comprise a processor which is configured to execute the respective computer-implemented methods of the first, second, and third, aspects of the invention.

Additional aspects of the invention may provide a computer program comprising instructions which, when the program is executed by a computer, cause the computer to carry out the steps of a computer-implemented method of any one of the first, second, and third aspects of the present invention. Further aspects of the invention may provide a computer-readable storage medium, having stored thereon the computer program of the previous aspects of the invention.

The invention includes the combination of the aspects and preferred features described except where such a combination is clearly impermissible or expressly avoided.

### BRIEF DESCRIPTION OF THE DRAWINGS

Embodiments and experiments illustrating the principles of the invention will now be discussed with reference to the accompanying figures in which:
- Fig. 1 shows a flow diagram of a digital signature being generated for authenticating audible speech in a video file;
- Fig. 2 shows a flow diagram of a digital signature being used to verify the audible speech in the video file;
- Fig. 3 shows a system which may be configured to execute a computer-implemented method according to one or more aspects of the present invention;
- Fig. 4 shows a system which may be configured to execute a computer-implemented method according to one or more aspects of the present invention;
- Fig. 5 is a flowchart illustrating an exemplary process for authenticating audible speech in a digital video file according to the first aspect of the present invention;
- Fig. 6 shows a system which may be configured to execute a computer-implemented method according to one or more aspects of the present invention;
- Fig. 7 is a flowchart illustrating an exemplary process for authenticating audible speech in a digital video file according to the second aspect of the present invention;
- Fig. 8 is a flowchart illustrating an exemplary process for retrieving an author name associated with a digital video file according to one or more aspects of the present invention;
- Fig. 9 is a flowchart illustrating an exemplary process for generating timing information for a digital video file according to one or more aspects of the present invention; and
- Figs. 10a and 10b are diagrams representing an audio track of being split into segments according to the computer-implemented method of one or more aspects of the present invention.

### DETAILED DESCRIPTION

Aspects and embodiments of the present invention will now be discussed with reference to the accompanying figures. Further aspects and embodiments will be apparent to those skilled in the art. All documents mentioned in this text are incorporated herein by reference.

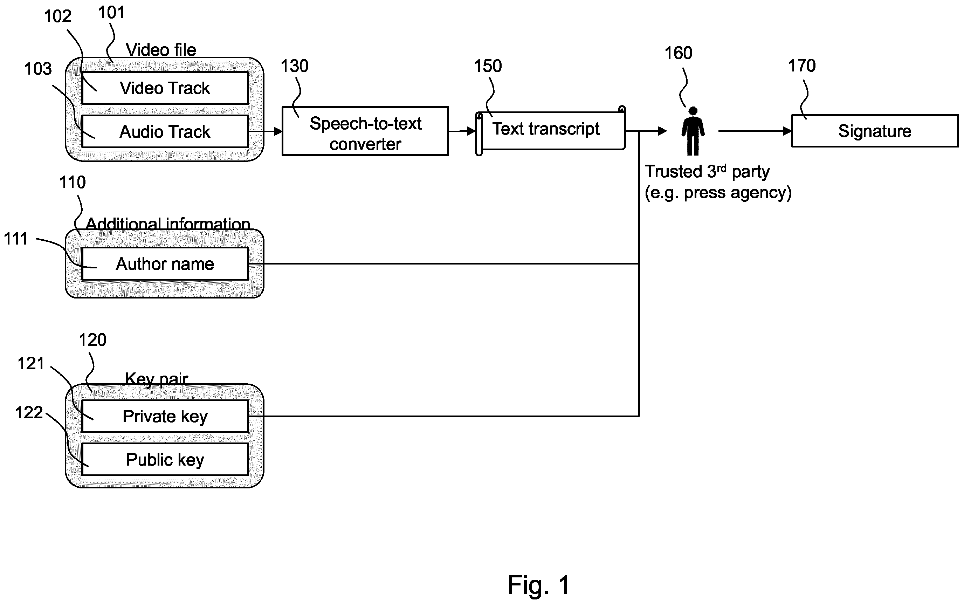

Fig. 1 shows a high-level flow diagram of a computer-implemented method of generating a digital signature 170 to authenticate audible speech in a digital video file 101 according to the present invention.

Typically, the digital video file 101 contains a person making a speech which can be heard by viewers watching the video. For example, the video may show a political leader making a speech or an announcement. A trusted party 160, for example a source of the video 101 such as a press agency or media company, who wishes to share the video online or on social media platforms may wish to generate a digital signature 170 according to the computer-implemented method shown in Fig.1 in order to allow recipients of the video 101 to check if the speech in the video 101 has been tampered with.

The digital video file 101 comprises a video track 102 containing pixel information for displaying images on a screen at a predetermined frame rate, and an audio track 103 containing audio information for playing alongside the video track 102.

As shown in Fig.1, first, an electronic transcript 150 of the audible speech in the audio track 103 of the digital video file 101 is obtained using a speech-to-text converter 130. In other examples, the electronic transcript 150 may be obtained as an input from the trusted party 160 that is authenticating the video.

In this example, additional information 110 about the video file 101 is also acquired which includes an author of the audible speech in the video. For example, the author may be acquired as an input from the trusted party 160 or may be extracted from metadata which accompanies the video file 101.

Next, the digital signature 170 is generated based on the electronic transcript 150 and a private key 121 using a digital signature algorithm.

The private key 121 is one of a key pair 120, which also includes a public key 122. The public key 122 is published by the trusted party 160 so that it can be accessed and used by recipients of the video who wish to verify the audible speech in the video 101.

The digital signature algorithm is a known digital signature algorithm such as RSA, DSA, ECDSA, or EdDSA.

In the example shown, the digital signature 170 is also generated based on the author name 111. To do this, a message is created containing the electronic transcript 150 concatenated with the author name 111. The message is then used to generate the digital signature 170 using the digital signature algorithm and the private key 121.

Finally, the video is "signed" by the trusted party 160 by inserting the digital signature 170 in the video track 102 of the digital video. The digital signature 170 may be a QR code which is embedded in the video track 102 as a watermark. However, the digital signature 170 may be inserted in the video track using other methods.

Next, the trusted party 160 may share the signed digital video file 101 containing the digital signature 170 with viewers. Viewers of the video may use the digital signature 170 which is embedded in the video track 102 to verify the audible speech in the shared video. By inserting in the digital signature 170 in the video track 102 of the digital video file 101, the signature 170 is made resistant to modification when the digital video file 101 is re-encoded, compressed, and shared across platforms.

Viewers who have received a copy of the signed digital video file 101 may install software, for example as an internet plug-in order to extract the signature 170 and verify the speech in the video.

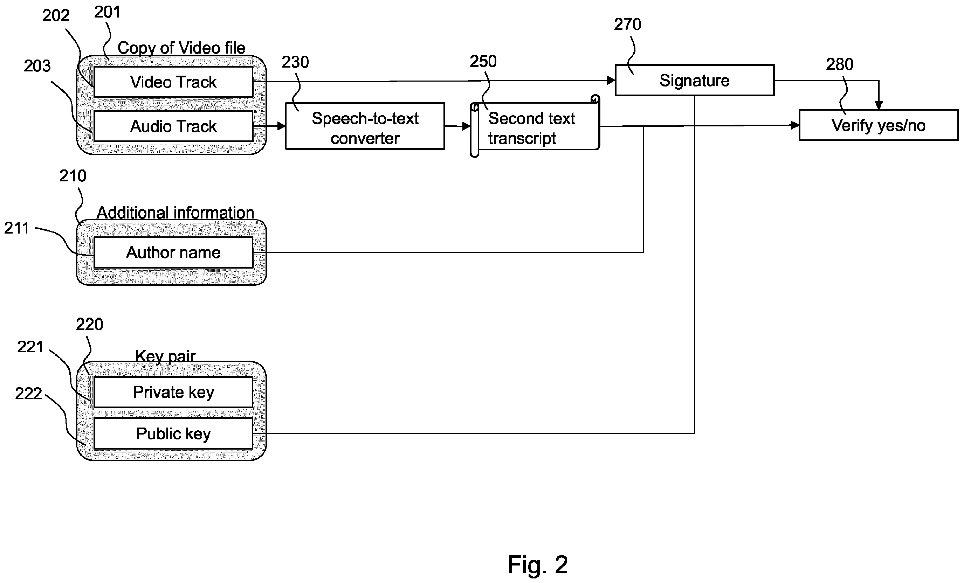

Fig. 2 shows a high-level flow diagram of a computer-implemented method of verifying a digital signature 270 to authenticate audible speech in a copy of a signed digital video file 201 according to the present invention.

First, a second electronic transcript 250 of the unverified audible speech in the copy of the digital video file 201 is obtained from the audio track 203 of the copy of the digital video file 201 using a speech-to-text converter 230.

Preferably, the speech-to-text converter 230 is the same as the speech-to-text processor 130 which was used to generate the digital signature 270 to ensure that the second electronic transcript 250 is the same as the original electronic transcript 250 (unless the audible speech has been tampered with).

Next the digital signature 270 is extracted from the video track 202 of the copy of the digital video file 201.

Additional information 210 about the video file 201 is also acquired which includes an unverified author name 211 who is the person that appears to be the speaker of the audible speech in the copy of the video 201. For example, the author name 211 may be acquired as an input from the viewer of the video or may be extracted from metadata which accompanies the video file 201.

In some examples, candidate authors 211 may be suggested to the viewer based on historical data, facial recognition of the person speaking in the video file 201, or using internet searches to find the author of the speech. Once the unverified author name 211 is acquired a second message is created by concatenating the unverified author name 211 with the second electronic transcript 250.

The second message is then verified 280 using the digital signature 270 and the public key 222 using the digital signature algorithm.

The public key 222 may be chosen from a list of known public keys 222 associated with verified sources, for example the media company or press agency that released the video 201. Alternatively, the public key 222 may be acquired as a user input or from an automatic internet search for the source of the video 201.

If the digital signature 270 is successfully verified, then the viewer is notified that the electronic transcript 250 of the audible speech in the copy of the video file 201 is authentic. In this example, the viewer may also be notified that the apparent author 211 of the speech is verified. The viewer may be notified by displaying an icon next to the video 201 to inform the viewer that the transcript 250 and the author 211 of the speech have been authenticated.

Accordingly, recipients of the signed digital video file 201 can have more confidence that the audible speech which they are listening to is an authentic representation of the original speech.

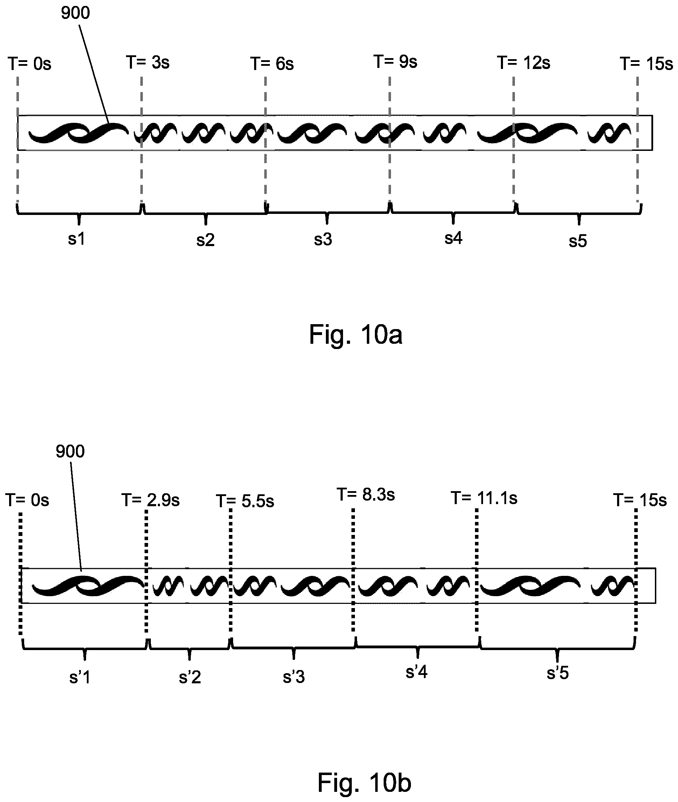

In some examples, timing information associated with the second electronic transcript 250 may be extracted from the copy of the digital video file 201. This timing information may then be used to display the second transcript 250 as subtitles on the video when it is being played. A method of extracting timing information is described in more detail below with reference to Figs. 10-11.

By displaying the second electronic transcript 250 as subtitles the viewer can read the transcript 250 while listening to the audible speech. Therefore, if the viewer hears something in the speech which is different to what is written in the subtitles, then the viewer may infer that the audio track 203 has been tampered with. This is useful in examples where the audio track of a video file 201 has been tampered with in such a way that the audible speech sounds different to a listener but so that the transcript 250 generated by a speech-to-text converter is unmodified compared to the original electronic transcript 150.

The timing information may also be included in the message which is used to generate the digital signature 270. Therefore, the timing of the speech may also be verified when the digital signature 270 is verified.

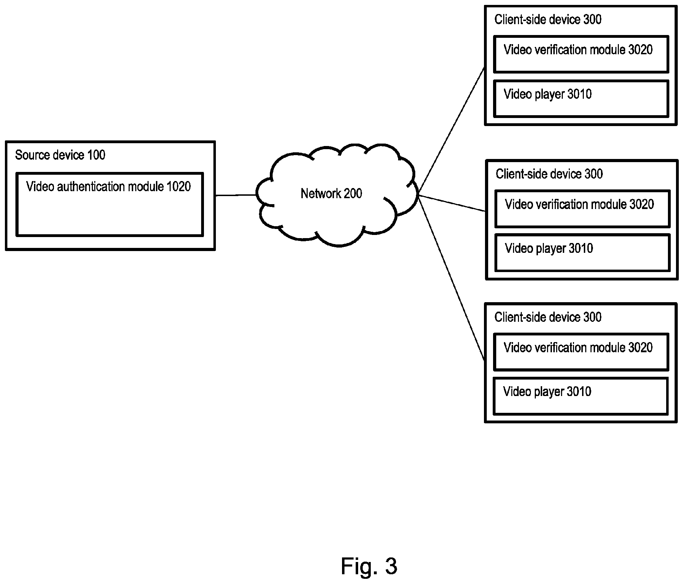

Fig. 3 shows a high-level system which may be employed to execute computer-implemented methods according to some aspects of the present invention.

The system includes a source device 100 connected via network 200 to a plurality of client-side devices 300.

The source device 100 is a computing device or system owned by a trusted party or source who wishes to share an authenticated (signed) digital video file with recipients (i.e. the source of a digital video file). The source device 100 comprises a video authentication module 1020 which is configured to authenticate the digital video file according to one or more aspects of the present invention.

Herein, the term "module" is used to refer to a functional module which is configured or adapted to execute a particular function. The modules may be implemented in hardware (i.e. they may be separate physical components within a computer), in software (i.e. they may represent separate sections of code, which when executed by a processor, cause the processor to perform a particular function), or in a combination of both.

The source device 100 is configured to share the authenticated digital video file with recipients via the network 200. The network 200 may be a wired network such as a LAN, or WAN, or a wireless network such as a Wi-Fi network, the Internet, or a cellular network.

The client-side devices 300 are computing devices or systems owned by recipients of the authenticated digital video file. The client-side devices 300 may be any suitable computing device which may be used for verifying the digital video file. For example, the client-side devices 300 may be, or comprise, one or more of the following: a desktop computer, a laptop computer, a tablet, a smartphone. The client-side devices may not only be physical computers owned by the recipients of the video file but could instead be websites which use remote computing hardware and servers.

Each client-side device comprises a video verification module 3020 which is configured to authenticate the audible speech in the received digital video file according to one or more aspects of the present invention. Broadly, the function of the video verification module 3020 is to verify the authenticity of audible speech in the received digital video file and notify the recipient if the audible speech has been successfully verified or not.

The video verification module 3020 may be a stand-alone software application which is installed on the client-side device 300. In other examples, the video verification module 3020 may be provided by a website or be installed as an internet plug-in on the client-side device 300. The video verification module 3020 may be configured to automatically attempt to verify all incoming digital video files to the respective client-side device 300. In other examples, a user of the client-side device 300 may manually activate the video verification module 3020 to verify particular digital video file which the user believes may not be authentic.

The client-side devices 300 are shown as having a video player 3010 for allowing the recipient to watch the received video. The video player may be optional, required only if the recipient of the video wishes to watch the video. The video player may comprise locally installed video viewing software which is installed on the client-side device 300 or the video player may be provided by a website. For example, the video player may be included in a social media application or included as part of a news website.

In some examples the source device 100 and the client-side device 300 may be part of the same device or computing system. For example, the video authentication module 1020 and the video verification module 3020 may be software modules installed on one system, wherein the network 200 comprises instructions configured to share a digital video file between the video authentication module 1020 and the video verification module 3020. This may be the case when a trusted party who has authenticated a digital video file using the video authentication module 1020 wishes to test that a copy of the authenticated digital video file is able to be verified successfully using the video verification module 3020.

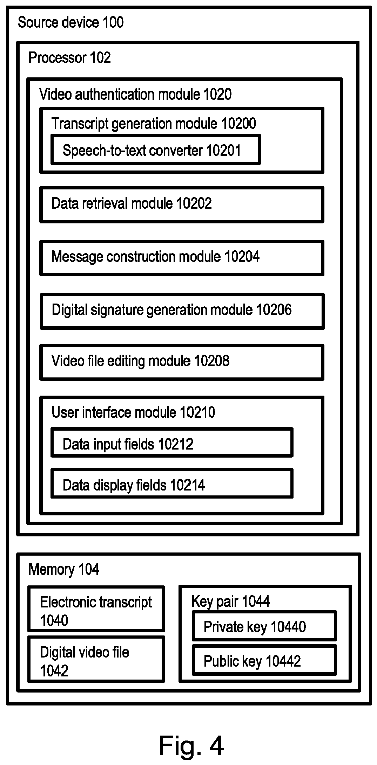

Fig. 4 shows a source device 100 which may be configured to execute a computer-implemented method of authenticating audible speech in a digital video file according to the present invention.

The source device 100 comprises a processor 102 comprising a video authentication module 1020 and a memory 104. In the example shown, the processor 102 and the memory 104 are part of the same computing system 100, but it will be appreciated that they may be located on separate physical components without deviating from the scope of the invention.

The memory 104 may comprise a combination of volatile and nonvolatile memory for storing data used by the video authentication module 1020.

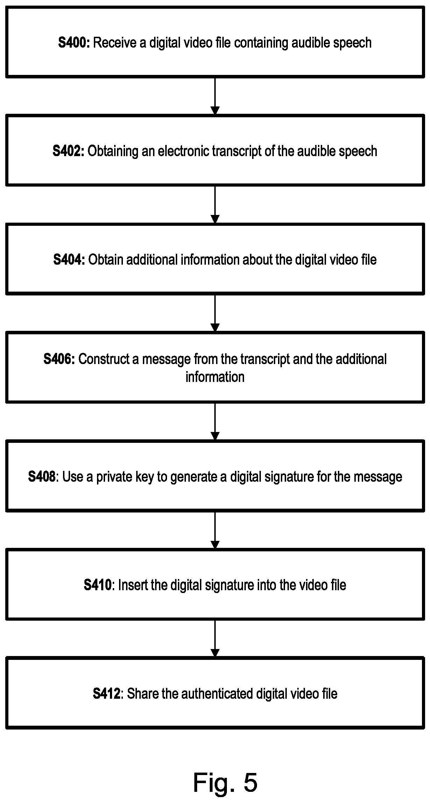

Broadly, the purpose of the video authentication module 1020 and its constituent modules is to authenticate audible speech in a digital video file and provide an authenticated (signed) digital video file for sharing. The video authentication module 1020 comprises a transcript generation module 10200 optionally containing a speech-to-text converter 10201, a data retrieval module 10202, a message construction module 10204, digital signature generation module 10206, a video file editing module 10208, and user interface module 1021. The function of each these modules is described in detail below with reference to Fig. 5.

The purpose of the user interface module 1021 to communicate with a display and/or a user interface device to provide information to and receive information from users of the source device 100. The user interface module 1021 comprises data display fields 10214 for controlling a display to present the user with information. For example, the data display fields 10214 may control the display to provide the user options of candidate author names (this is described in more detail below). The user interface module 1021 also comprises data input fields 10212 for receiving user inputs from a user input device. For example, the data input fields 10212 may receive a user selection of an author name for authenticating the digital video file (this is described in more detail below).

In some examples, the data input fields 10212 may, for example, receive user inputs from a keyboard, mouse, touchscreen, or any other user input device. In other examples, the data input fields 10212 may be virtual input fields for allowing users to copy data from another part of the memory or upload data to the video authentication module 1020.

Fig. 5. shows an example process of authenticating audible speech in a digital video file, which may be performed by the video authentication module 1020 of the source device.

In step S400 of Fig. 5, the video authentication module 1020 receives a digital video file 1042 containing audible speech. The digital video file 1042 may be generated locally by an owner of the source device 100. In other examples, the digital video file 1042 may be received from a third party that made the video. The digital video file 1042 is stored in memory 104 and comprises a video track (or video stream) containing frames configured to be displayed to viewers of the video at a predetermined frame rate and an audio track (or audio stream) containing audible speech which can be heard by people listening to the video.

In step S402, the transcript generation module 10200 is used to obtain an electronic transcript 1040 of the audible speech in the audio track. The electronic transcript 1040 is typically a text file containing words which form some or all of the audible speech in the audio track.

Step S402 may include using a speech-to-text converter 10200 to automatically convert the audible speech in the audio track to text. The text is then stored in the memory 104 as the electronic speech transcript 1040.

Alternatively, step S402 may include receiving the electronic transcript as a user input. In this case the transcript generation module 10200 may use the data display fields 10214 of the user interface module 10210 to request an electronic transcript of the speech in the digital video file 1042 from a user. The electronic transcript may be provided to the transcript generation module by the data input fields 10212 of the user interface module 10210. For example, a user may manually upload a text file to the user interface module 10210 which contains the words spoken in the video. The uploaded text file may then be stored in memory 104 as the electronic transcript 1040.

In step S404 of Fig. 5, the data retrieval module 10202 obtains additional information about the digital video file 1042. The additional information about the digital video file 1042 may include any information that a viewer of the video may determine by watching the video or by inspecting the video file 1042.

For example, the additional information may include an author or speaker of the audible speech in the video file, a date associated with the digital video file 1042, timing and/or location information about events recorded in the digital video file, timing information associated with the audible speech and/or any other information which may be obtained about the digital video file 1042.

The data retrieval module 10202 may be configured to retrieve the additional information using the data input fields 10212 of the user interface module 10210 wherein the additional information is provided by a user of the source device 100. In other examples, the data retrieval module 10202 may be configured to automatically derive some or all of the additional information from the digital video file itself (e.g. by inspecting the metadata of the video file) or perform an internet search for additional information.

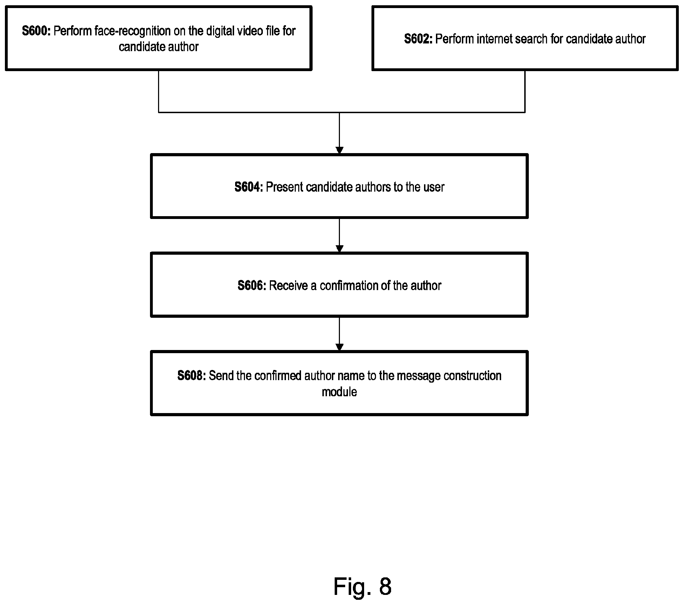

In some examples, the data retrieval module 10202 may be configured to obtain an author name associated with the audible speech in the digital video file. An example process of obtaining the author name is described in detail below with reference to Fig. 8.

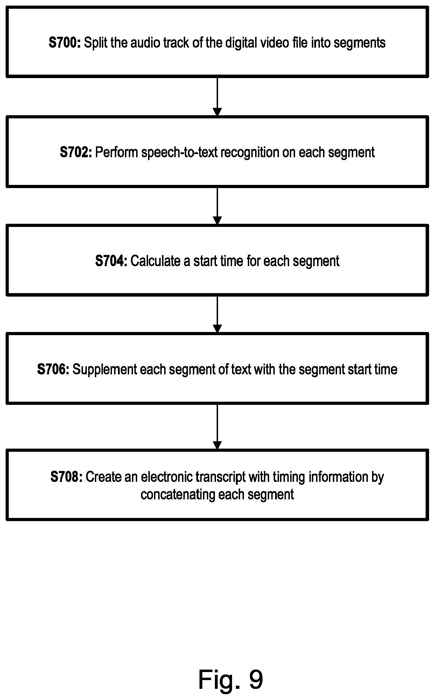

In some examples, the data retrieval module 10202 may additionally or alternatively be configured to extract timing information associated with the audible speech from the digital video file 1042. An example process for extract timing information is described in detail below with reference to Figs. 9 and 10. It should be noted that the transcript generation module 10200 may be configured to extract the timing information associated with the audible speech as part of the step of generating the electronic transcript.

In step S406 the electronic transcript 1040 and the additional information are provided to the message construction module 10204 which constructs a message from the electronic transcript 1040 and the additional information. Typically, the message contains the electronic transcript 1040 concatenated with the additional information at the beginning or end of the transcript 1040 (e.g. transcript + author name). However, in some examples the additional information may interspersed with the transcript 1040 (e.g. as is described below for the timing information with reference to Figs. 9-10).

Note, in some examples where additional information is not used to authenticate the digital video file 1042 the message may contain only the electronic transcript 1040.

In step S408 the digital signature generation module 10206 uses the constructed message provided by the message construction module 10204 and a private key 10440 to generate a digital signature using a known digital signature algorithm (e.g. RSA, DSA, ECDSA, EdDSA etc).

The private key 10440 is a secret key stored locally in the memory 104. Typically the private key 1044 would be accessible only to the source device 100 which is authenticating the digital video file 1042. The private key 1044 is one of a private-public key pair 1044. The public key 10442 is typically published so that recipients of the authenticated digital video file can use the public key 10441 to verify the digital signature.

The form of the generated digital signature may vary depending on the digital signature algorithm used to generate it. For example, if the digital signature was generated using ECDSA then the signature may be in the form of a pair of two integer numbers (r, s).

The generated digital signature may then be encoded as a visible icon such as a QR code or a bar code. For example, the pair of two integer numbers (r, s) from an ECDSA signature may be directly encoded as a QR code.

In some examples, the generated digital signature may first be encoded in a known, computer readable format before being encoded as a QR code. For example, the generated digital signature may be encoded in a DER format (a binary format) or as a JSON (JavaScript Object Notation). The encoded digital signature may then be encoded as a visible icon such as a QR code or bar code for insertion in the video track of the digital video file 1042.

In step S410 the video editing module 10208 edits the digital video file 1042 to insert the encoded digital signature into the video track of the digital video file 1042. For example, when the encoded digital signature is encoded as a QR code, it may be inserted in the video track as a visible watermark in a corner of the video frames.

Steps S408 and S410 may be referred to together as "signing the digital video file" to generate an "authenticated digital video file" (which may also be referred to as a "signed digital video file").

Finally, in step S412 the source device 100 shares the authenticated digital video file with recipients via the network 200 or stores the authenticated digital video file in memory 104 for sharing later.

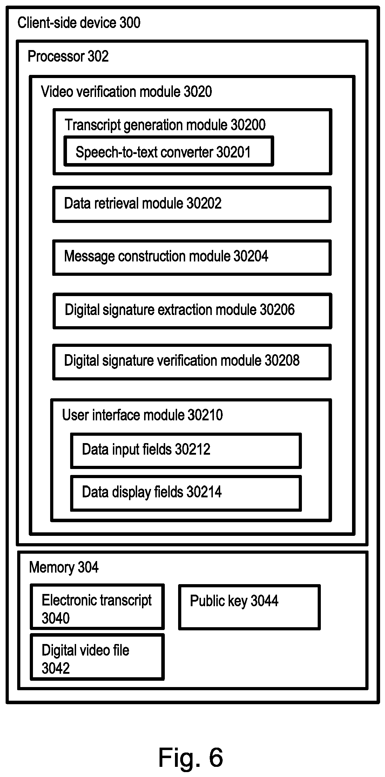

Fig. 6 shows a client-side device 300 which may be configured to execute a computer-implemented method of authenticating audible speech in a copy of a digital video file 3042 according to the present invention.

The client-side device 300 comprises a processor 302 and a memory 304. In the example shown, the processor 302 and the memory 304 are part of the same computing system 300, but it will be appreciated that they may be located on separate physical components without deviating from the scope of the invention. As mentioned above, the client side-device may be a local computing device comprising the processor 302 and memory 304 which is owned by the recipient of a video. However, the client side-device may also be remote computing hardware which is accessible via the internet.

The processor 302 comprises a video verification module 3020 and a user interface module 3021.

The video verification module 3020 may be a software module which is installed as a stand-alone program on the client-device 300. Alternatively, the video verification module 3020 may be an internet plug-in which is accessed by the client-device 300 when a user of the client-device wishes to authenticate and view videos on the internet.

Broadly, the purpose of the video verification module 3020 is to verify the audible speech in a copy of a signed digital video 1042 file to determine if the audible speech is authentic or not. The video verification module 3020 comprises: a transcript generation module 30200 containing a speech-to-text converter 30201, a data retrieval module 30202, a message construction module 30204, a digital signature extraction module 30206, a digital signature verification module 30208, and a user interface module 30210

The user interface module 30210 is similar to the user interface module 10210 of the source device 100 in that it is configured to communicate with a display and/or a user interface device to provide information to and receive information from users of the client-side device 300. The user interface module 3021 comprises data display fields 30214 for controlling a display to present the user with information. For example, the data display fields 30214 may control the display to the user options for author names (this is described in more detail below). The data display fields 30214 are also configured to notify the user whether the digital video file has been successfully verified or not.

The user interface module 1021 also comprises data input fields 10212 for receiving user inputs from a user input device. For example, the data input fields 10212 may receive a user selection of an author name for authenticating the digital video file (this is described in more detail below). The data input fields 10212 may, for example, receive user inputs from a keyboard, mouse, touchscreen, or any other user input device. In other examples, the data input fields 10212 may be virtual input fields for allowing users to copy data from another part of the memory 104 or upload data to a part of the memory 104 associated with the video authentication module 1020.

The memory 304 comprises a combination of volatile and nonvolatile memory for storing data used by the video verification module 3020.

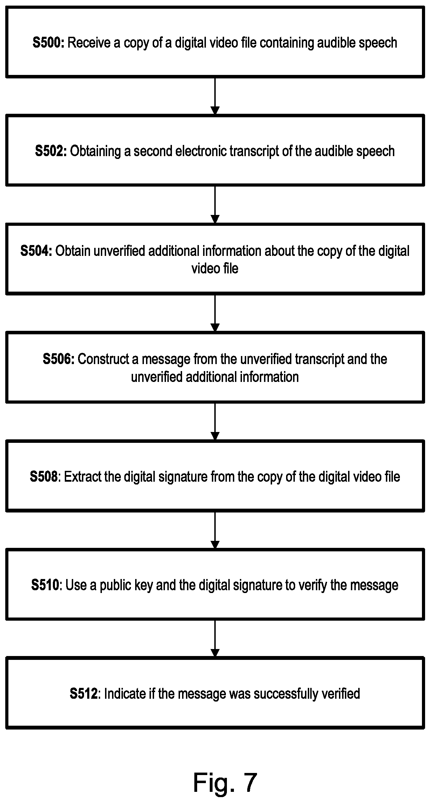

Fig. 7. shows an example process of authenticating audible speech in a copy of a digital video file 1042, which may be performed by the video verification module 3020 of the client-side device 300.

In step S500 of Fig. 5, the video verification module 3020 receives a copy of an authenticated digital video file 3042 containing audible speech. The copy of the digital video file 3042 be received from the network 200, for example on a website or social media application. In other examples, the copy of the digital video file may be provided directly to the client-side device by a user (e.g. on a memory stick or other external storage means). The copy of the digital video file is stored in memory 304 for viewing and authentication of the audible speech.

An additional step (not shown) may comprise checking if the copy of the digital video file has been signed (i.e. check if there is a digital signature inserted in the video track). If the digital video file has been signed then the remaining steps S502 - S512 may be executed to authenticate the audible speech in the copy of the digital video file.

If the digital video file has not been signed then a notification may be presented to a user via the data display fields 30214 of the user interface module 30210 to inform the user that the audible speech in the digital video file cannot be verified.

In step S502 the transcript generation module 30200 is used to obtain a second electronic transcript 3040 of the audible speech in the audio stream using the speech-to-text converter 30201. Since the second electronic transcript 3040 has not yet been verified using the digital signature, the second electronic transcript 3040 may also be referred to as an "unverified electronic transcript" 3040.

The second electronic transcript 3040 is typically a text file stored in the memory 304 containing spoken words which can be heard in some or all of the audible speech of the audio track.

Preferably, the speech-to-text converter 30201 used by the client-side device 300 to obtain the second electronic transcript 3040 is the same as the speech-to-text converter 10201 used by the source device to generate the digital signature for signing the digital video file. Specifically, the speech-to-text converter 30201 of the client-side 300 device may comprise a conversion algorithm which is the same as the conversion algorithm used by the speech-to-text converter 10201 of the source device 100. This is useful to ensure that words in audible speech which may be interpreted differently by different conversion algorithms are more likely to be the same in the first 1040 and second 3040 electronic transcripts.

It should be noted that if the first electronic transcript 1040 was generated without using a speech-to-text converter 10201 at the source device 100, then the speech-to-text converter 30201 of the client-side device 300 may use any suitable conversion algorithm.

In step S504, the data retrieval module 30202 obtains unverified additional information about the copy of the digital video file 3042. The unverified additional information about the digital video file 3042 may include any information that a viewer of the video may determine by watching the video or by inspecting the video file. Specifically, the unverified additional information should include at least data corresponding to the additional information that was used by the source device 100 to generate the digital signature.

For example, if the additional information used to generate the digital signature included an author name, a date, a location, and timing information associated with the audible speech, then the data retrieval module 30202 may be configured to retrieve unverified information corresponding to an author name, a date, a location, and timing information associated with the audible speech.

The data retrieval module 30202 may be configured to retrieve the additional information using the data input fields 30212 of the user interface module 30210 to receive information provided by a user of the client-side device 300. In other examples, the data retrieval module 30202 may be configured to automatically derive information from the copy of digital video file 3042 itself (e.g. by inspecting the metadata of the video file) or perform an internet search for additional information.

If the unverified additional information includes an author name then the data retrieval module 130202 may be configured to obtain an author name associated with the audible speech in the digital video file 3042. An example process of obtaining the author name is described in detail below with reference to Fig. 8.

If the unverified additional information includes timing information associated with the audible speech in the copy of the digital video file 1042 then data retrieval module 30202 (or the transcript generation module 30200) may be configured to the extract timing information. An example process for extracting timing information is described in detail below with reference to Figs. 9 and 10.

In step S506, the message construction module 30204 uses the second electronic transcript 3040 and the unverified additional information to construct a message for verification. Typically, the message contains the second electronic transcript 3040 concatenated with the unverified additional information at the beginning or end of the second electronic transcript 3040 (e.g. transcript + author name). However, in some examples the additional information may interspersed with the second electronic transcript (e.g. as described below for timing information with reference to Figs. 9-10) .

Importantly the method of constructing the message used by the client-side device 300 should be the same as the method of constructing the message used by the source device 100. This is necessary to ensure that the message being verified using the digital signature is the same as the message that was used to generate the digital signature (unless the digital video file 3042 has been tampered with), otherwise the message will not be able to be successfully verified.

In step S508, the digital signature extraction module 30206 is used to extract the digital signature from the video track of the copy of the digital video file 3042. This step may first comprise detecting the digital signature in the copy of the digital video file 3042 before the digital signature is extracted.

Extracting the digital signature from the video track may include decoding any frame of the video track in which a QR code is present. Decoding a frame of the video track gives an image of the QR code (or another format which was used to insert the digital signature in the video track).

The QR code may then be interpreted using a QR code reading library to obtain the message which was encoded using the QR code. The message may be further decoded using the encoding format was used to originally encode the digital signature (e.g. DER, JSON etc) to obtain the digital signature in a format which may be used for verification.

Once the digital signature has been extracted, it is provided to the digital signature verification module 30208 for verification of the message.

In step S510 the digital signature verification module 30208 uses the constructed message provided by the message construction module 30204 and a public key 30440 to verify the digital signature using the known digital signature algorithm (e.g. RSA, DSA, ECDSA, EdDSA etc). If the digital signature is successfully verified then the digital signature verification module 30208 may determine that the message constructed at the client-side device from the copy of the digital video file was the same as the message that was used by the source device 100 to generate the digital signature.

The public key 3044 is part of a private-public key pair that was used to sign the original digital video file with the digital signature. The public key 3944 may be selected from a list of known public keys associated with verified sources of digital video files. The list of known public keys may be included in the memory 304. For example, the list of known public keys may be installed on the client-side device 300 when the video verification module is installed.

Alternatively the digital signature verification module 30208 uses may be configured to request a user to manually input the public key 3044 via the data input fields 30214 of the user interface module 30210. For example, the data input fields 30212 may comprise a text box or drop-down menu for a user to enter the public key 3044. The public key 3044 may then be provided to the digital signature verification module 30208 by the data input fields 30212.

In other examples, the public key 3044 may be obtained by conducting an automatic internet search to find a verified source of the digital video file 3042 and retrieving the public key 3044 from the verified source.

Finally, in step S512 the data display fields 30214 of the user interface module 30210 are used to indicate to a user of the client-side device 300 if the message was successfully verified. For example, an icon may be displayed next to the digital video file on a display which is configured to indicate that the message (and therefore the second transcript 3040 and the unverified additional information) was successfully verified. If the icon is not present or if it is in a different colour then a user may infer that the message was not successfully verified. This is an indication that the audible speech in the copy of the video file is not the same as the audible speech that was in the source video file which could mean that the video has been tampered with.

Fig.8 shows an example method of retrieving an author name associated with the audible speech in a digital video file 1042, 3042.

This method may be performed by the data retrieval module 10202 of the source device in Fig. 4 (for example when performing step S404 of Fig. 5) or by the data retrieval module 30202 of the client-side device in Fig. 6 (for example when performing step S504 of Fig. 7).

First, in steps S600 and S602 the data retrieval module 10202, 30202 determines candidate authors of the audible speech in the digital video file 1042, 3042.

In step S600 the data retrieval module 10202, 30202 performs face-recognition on the video track of the digital video file 1042, 3042 to detect the faces of people visible in the video. The detected faces are then compared to the faces of known people to identify the names of people visible in the video. Multiple potential people may be identified as the people visible in the video. The names of the people identified in the video are then classified as candidate authors.

In step S602, which may be performed as well as or instead of step S600, the data retrieval module 10202, 30202 performs an automatic internet search for candidate authors of the audible speech. The internet search may be configured to identify famous people who are currently trending in news stories. In other examples, the internet search may be configured to perform a speech using the electronic transcript of audible speech in the video or other information about the digital video file such as the video title to identify candidate authors.

In step S604 the candidate authors are presented to a user of the source device 300 or the client-side device 100 using the user interface module 10210, 30210. For example, the candidate authors may be displayed as options in a list or a drop-down menu.

In step S606 the data retrieval module 10202, 30202 receives confirmation of the author name from the user via the user interface module 10210, 30210.

In step S608 the confirmed author name is provided to the message construction module 10204, 30204 (i.e. for generation of the digital signature on the source device or for verification of the digital signature on the client-side device).

In this way, the apparent speaker that a user can see in the digital video file may be verified as the original speaker in the digital video file.

Note that in other methods, not shown, the author may be obtained as a user input without generating candidate authors.

Fig.9 shows an example method of extracting timing information associated with the audible speech in the digital video file 1042, 3042.

This method may be performed by the transcript generation module 10200 of the source device 100 in Fig. 4 (for example when performing step S404 of Fig. 5) or by the transcript generation module 30200 of the client-side device 300 in Fig. 6 (for example when performing step S504 of Fig. 7).

In this context, timing information associated with the audible speech is data which represents the placement, in time, of sections of the audible speech within the digital video file 1042, 3042. Including timing information in the message which is used to generate the digital signature allows the timing of the audible speech to be verified.

In some examples, the timing information may be extracted from the copy of the digital video file at the client-side 300 for use in displaying the second electronic transcript 3040 of the speech as subtitles when the video is being viewed.

In step S700 of Fig.9 the audio track of the digital video file 1042 (or copy of the digital video file 3042) is split into segments. The segments may have a predetermined, fixed length or have a variable length.

For example, Fig. 10a shows an example of speech 900 (represented by the bold black squiggles) which is split into segments s1-s5 of a fixed length of 3 seconds. Other segment lengths may be used to split the audio track where longer segment lengths provides less timing resolution but shorter segment lengths requires more timing information to be stored.

In contrast, Fig. 10b shows speech 900 which has been split into segments s'1 - s'5 with variable segment lengths. In this example, the segment length is adjusted to ensure that words or sentences are not divided between segments which could cause issues when subtitles are displayed later or during speech-to-text translation of each segment later.

In step s702 the transcript generation module 10200, 30200 performs speech recognition on each segment of the audible speech in the digital video file 1042, 3042 using the speech-to-text converter 10201, 30202 to generate an electronic transcript 1040. 3040 which is split into segments.

In step s704 the transcript generation module 10200, 30200 calculate a start time for each segment of electronic transcript. When the segments have a fixed segment length the start time for each segment may be calculated by multiplying a segment number, corresponding to the placement of the segment in the digital video file, by the segment length. In other examples, the start time for each segment may be obtained by multiplying a frame number of the digital video file by a frame rate that the video is intended to be played at. In yet more example, the start time may be obtained initially when the audio track is split into segments in S700.

In step s706 each segment of the electronic transcript is supplemented with the start time for each segment. Additionally or alternatively, each segment of the electronic transcript 1040, 3040 may be supplemented with a segment number and/or an end time corresponding to each segment.

In step s708 a complete electronic transcript 1040 (or second electronic transcript 3040) is created by concatenating each supplemented segment together. The electronic transcript 1040 (or second electronic transcript 3040) may then be stored in memory 104 304 (i.e. for generation of the digital signature on the source device or for verification of the digital signature or for display of subtitles on the client-side device).

By including timing information in the message which is used to generate the digital signature, the timing of the speech may also be verified when the digital signature is verified.

In some examples, the client-side device 300 may use the timing information associated with the audible speech to display subtitles on the video when it is being played. For example, the client-side device 300 may comprise a video viewer module which is configured to play the video and display the second electronic transcript as subtitles overlaid on or near to the video when it is being played. In particular, the video viewer module may extract each segment start time from the electronic transcript 3042 and then display each segment when the video reaches the segment start time. In this way, a viewer of the video may compare the audible speech that they can hear with the text that is being displayed as subtitles.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method of authenticating audible speech in a digital video file, the computer-implemented method comprising:
obtaining an electronic transcript of the audible speech from an audio track of the digital video file,
generating a digital signature based on the electronic transcript and a private key using a digital signature algorithm,
inserting the digital signature in a video track of the digital video file.

2. The computer-implemented method of claim 1, wherein obtaining the electronic transcript of the audible speech comprises converting the audible speech from the audio track of the digital video file to text using an automatic speech-to-text converter.

3. The computer-implemented method of any preceding claim further comprising:
obtaining additional information about the video file, wherein the generated digital signature is based on the electronic transcript, the private key, and the additional information.

4. The computer-implemented method of claim 3 wherein at least some of the additional information is obtained from metadata of the video file, and/or at least some of the additional information is received as a user input.

5. The computer-implemented method claims 3 or 4 wherein the additional information includes an author of the audible speech.

6. The computer-implemented method of any of claims 3 to 5,
wherein the additional information about the video file includes timing information associated with the audible speech; wherein:
the timing information is obtained by splitting the audio track into segments each having a segment length, and the electronic transcript of the audible speech is obtained for each segment of the audio track,
wherein the electronic transcript is supplemented with information containing a start time of each segment.

7. The computer-implemented method of any one of claims 1 to 6, wherein the digital signature is inserted in the video track as a QR code.

8. A computer-implemented method of authenticating audible speech in a copy of a digital video file, the method comprising:
receiving a copy of the digital video file containing unverified audible speech,
obtaining a second electronic transcript of the unverified audible speech from the audio track of the copy of the digital video file,
extracting a digital signature from the video track of the copy of the digital video file,
verifying the digital signature using the second electronic transcript and a public key using a digital signature algorithm, and
if the digital signature is successfully verified, determining that the transcript of the audible speech from the copy of the video file is authentic.

9. The computer-implemented method of claim 8, wherein the digital signature is inserted in the video track as a QR code.

10. The computer-implemented method of claim 8 or claim 9 wherein obtaining the second electronic transcript of the unverified audible speech from the audio track of the copy of the digital video file comprises converting the audible speech to text using an automatic speech-to-text converter.

11. The computer-implemented method of any one of claims 8 to 10 further comprising obtaining the public key from a list of known public keys associated with verified sources.

12. The computer-implemented method of any one of claims 8 to 11 further comprising informing a user that the second electronic transcript is authentic, wherein informing the user displaying an icon next to the copy of the video when the digital video file is being displayed.

13. The computer-implemented method of any one of claims 8 to 12 further comprising:
obtaining unverified additional information about the copy of the digital video file, wherein the second electronic transcript, the unverified additional information and the public key are used to validate the digital signature.

14. The computer-implemented method of claim 13 or claim 14,
wherein the unverified additional information about the copy of the digital video file includes timing information associated with the unverified audible speech.

15. The computer-implemented method of any one of claims 8 to 15, further comprising displaying the second electronic transcript as subtitles.
